(19) Europäisches Patentamt
European Patent Office
Office européen des brevets

(11) **EP 2 443 436 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(21) Anmeldenummer: **10727385.6**

(22) Anmeldetag: **17.06.2010**

(51) Int Cl.:
*G01J 3/02* (2006.01)   *G01J 3/10* (2006.01)
*G01N 21/25* (2006.01)   *G01N 21/78* (2006.01)
*G01N 21/31* (2006.01)   *G01N 21/85* (2006.01)

(86) Internationale Anmeldenummer:
**PCT/EP2010/058533**

(87) Internationale Veröffentlichungsnummer:
**WO 2010/146110 (23.12.2010 Gazette 2010/51)**

(54) **KÜVETTENLOSES SPEKTROMETER**

SPECTROMETER WITHOUT A CUVETTE

SPECTROMÈTRE SANS CUVE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **17.06.2009   DE 102009025261**

(43) Veröffentlichungstag der Anmeldung:
**25.04.2012   Patentblatt 2012/17**

(73) Patentinhaber: **OASE GmbH**
**48477 Hörstel-Riesenbeck (DE)**

(72) Erfinder:
• **WILLUWEIT, Thomas**
**95030 Hof (DE)**
• **SACK, Achim**
**91056 Erlangen (DE)**
• **GRIESBACH, Ralf**
**95030 Hof (DE)**

(74) Vertreter: **Isarpatent**
**Patent- und Rechtsanwälte Barth**
**Charkes Hassa Peckmann & Partner mbB**
**Postfach 44 01 51**
**80750 München (DE)**

(56) Entgegenhaltungen:
WO-A1-02/060320       DE-B3-102006 004 916
DE-U1- 8 407 054       DE-U1- 9 319 749
JP-A- S61 111 443      JP-A- 2006 153 543
JP-A- 2006 284 398

• **"PROBENEHMER 14 STATIONAERE UND PORTABLE PROBENEMER" INTERNET CITATION 1. Januar 2004 (2004-01-01), XP002382972 Gefunden im Internet: URL:http://www.hach-lange.de/common/docume nts/1005/1009/10544_Ebook_D_HL_ Katalog_Teil4.pdf [gefunden am 2006-05-29]**

EP 2 443 436 B1

# EP 2 443 436 B1

**Beschreibung**

Die vorliegende Erfindung bezieht sich auf ein küvettenloses Spektrometer.

Spektrometer zum Messen der Konzentration wenigstens eines Analyts in einer Fluidprobe sind allgemein bekannt. Das Spektrometern zugrunde liegende Messverfahren beruht auf dem bekannten physikalischen Phänomen, dass ein Lichtstrahl eine Schwächung (Extinktion) erfährt, wenn er ein Fluid durchdringt. Die Schwächung ist proportional zur Konzentration des Analyts und zur Messstrecke in dem Fluid, welche von dem Lichtstrahl durchdrungen werden muss. Dieser physikalische Zusammenhang wird durch das Lambert-Beersche-Extinktionsgesetz beschrieben.

Bei bekannten Spektrometern, wie beispielsweise in der Druckschrift DE 28 38 498 C2 beschrieben, handelt es sich um vergleichsweise groß dimensionierte Geräte, die stationär im Labor betrieben werden. Um mittels der bekannten Spektrometer die Konzentration eines Analyts in einer Fluidprobe zu messen, muss die Fluidprobe zunächst in eine Küvette gegeben werden, die daraufhin in dem entsprechenden Spektrometer angeordnet wird.

Bei dem vorstehend beschriebenen Ansatz hat es sich als nachteilig herausgestellt, dass handelsübliche Küvetten eine feste Messstrecke definieren, welche durch die planparallelen Seitenflächen einer jeweiligen Küvette vorgegeben ist. Benötigt man nun aber eine größere Messstrecke, zum Beispiel bei sehr niedrigen Konzentrationen des Analyts in der Fluidprobe, muss eine entsprechend anders dimensionierte Küvette verwendet werden. Dies ist vergleichsweise umständlich. Hinzu kommt, dass Küvetten durch die Berührung mit den Fingern leicht verschmutzen oder auch leicht versehentlich fallengelassen werden und zerbrechen.

Aus der DE 10 2006 004916 B3 ist des Weiteren eine Vorrichtung zur optischen Messung von Stoffkonzentrationen bekannt. Diese weist einen in bzw. an einem Gehäuse angeordneten Sender und einen Empfänger für optische Strahlung und eine von dem Sender und dem Empfänger beabstandete, bei bestimmungsgemäßer Verwendung der Vorrichtung innerhalb des Stoffes angeordneten Umlenkeinrichtung zum Umlenken der optischen Strahlung von dem Sender zu dem Empfänger auf.

In der DE 93 19 749 U1 ist außerdem eine Vorrichtung offenbart die Außenabmessungen einer in ein Spektralphotometer passend einsetzbaren, von dem Licht beaufschlagbaren Küvette und eine in ihrem Inneren angeordnete Lichtumlenkung sowie die Anschlüsse für die Lichtleiter aufweist. Die Lichtumlenkungen befinden sich dabei an der Stelle dieser Vorrichtung, an welcher bei üblichen Küvetten Eintritts- und Austrittsfenster für das zur Messung dienende Licht vorgesehen sind. Die erste Lichtumlenkung lenkt das von dem Spektralphotometer eingestrahlte Licht zu dem ersten Lichtleiter um, der zu der Meßstelle führt, und die zweite Lichtumlenkung lenkt das in einem zweiten Lichtleiter von der Meßstelle zurückkommende Licht zu dem Detektor des Spektralphotometers um.

Des Weiteren ist aus dem Auszug "Probennehmer 14 stationäre und portable Probennehmer" ein portabler Probennehmer bekannt.

Weiter ist aus der JP 2006 153543 A eine Messzelle bekannt, bei welcher eine optische Weglänge einstellbar ist.

In der JP 2006 284398 A und der JP S61 111443 A sind des Weiteren Sensorvorrichtungen zum Messen einer Wasserqualität offenbart.

Aufgabe der vorliegenden Erfindung ist es daher, ein verbessertes Spektrometer bereitzustellen, welches insbesondere die beschriebene, umständliche Handhabung der Küvetten vermeidet.

Diese Aufgabe wird durch ein küvettenloses Spektrometer gemäß dem Patentanspruch 1 gelöst.

Die der vorliegenden Erfindung zugrunde liegende Idee besteht darin, komplett auf die Verwendung von Küvetten zu verzichten und gleichzeitig eine veränderliche Messstrecke vorzusehen.

Somit entfällt die umständliche Handhabung der Küvetten und gleichzeitig wird das Messen von sehr hohen und sehr niedrigen Konzentrationen eines Analyts in einer Fluidprobe ermöglicht.

Aus den Unteransprüchen ergeben sich vorteilhafte Ausgestaltungen und Weiterbildungen der vorliegenden Erfindung.

Unter einem "Fluid" ist vorliegend eine Flüssigkeit, ein Gas oder ein Gemisch dieser zu verstehen. Bevorzugt kann ein Fluid auch einen Feststoffanteil aufweisen.

Vorliegend ist mit "Licht" vorzugsweise nicht nur sichtbares Licht gemeint, sondern auch beispielsweise Infrarot, UV- der Röntgenstrahlung.

Gemäß einer Ausführungsform sind die Lichtquelle und der Photodetektor für ein Verändern der Messstrecke zueinander beweglich vorgesehen. Dadurch kann auf einfache Weise die Messstrecke verändert werden.

Gemäß einer Ausführungsform ist die Messstrecke zwischen der Lichtquelle oder dem Photosensor und einem im Strahlengang angeordneten Lichtleiter definiert, wobei die Lichtquelle und der Lichtleiter und/oder der Photosensor und der Lichtleiter für das Verändern der Messstrecke zueinander beweglich vorgesehen sind. Auch dadurch kann auf einfache Weise die Messstrecke verändert werden.

Gemäß des erfindungsgemäßen Spektrometers ragt der Lichtleiter in eine Hülse hinein, wobei die Messstrecke zwischen einer Stirnseite des Lichtleiters und einem Endstück der Hülse gebildet und mittels Verschiebens der Hülse und des Lichtleiters zueinander veränderlich ist. Die Messstrecke kann dadurch verändert werden, dass die Hülse weiter auf den Lichtleiter aufgeschoben wird, wobei der Lichtleiter zu dem erwähnten Handhabungsteil stationär vorgesehen ist. Mit "Stirnseite" ist das Ende des Lichtleiters gemeint, an welchem der Lichtstrahl ein- oder austritt.

Gemäß des erfindungsgemäßen Spektrometers weist die Hülse wenigstens eine Öffnung auf, welche das Einbringen der Fluidprobe in die Messstrecke erlaubt. Dadurch kann die Fluidprobe auf einfache Weise in die Messstrecke eingebracht werden. Außerdem ergibt sich damit auch einfach die Möglichkeit, das Spektrometer als Tauchspektrometer vorzusehen. Mit "Tauchspektrometer" ist gemeint, dass das Spektrometer zur Entnahme einer Fluidprobe aus einem Fluid mit einem Abschnitt des Spektrometers in das Fluid getaucht wird und dadurch die Fluidprobe aus dem Fluid aufgenommen wird.

Gemäß einer weiter bevorzugten Weiterbildung des erfindungsgemäßen Spektrometers sind entlang des Strahlengangs zwei der Öffnungen voneinander beabstandet in der Hülse vorgesehen. Dadurch kann in dem Fall, dass eine große Messstrecke vorgesehen wird, die entsprechend große Fluidprobe vergleichsweise schnell in die Messstrecke eingebracht werden.

Gemäß des erfindungsgemäßen Spektrometers ist der Lichtleiter an einem Handhabungsteil des Spektrometers fest angebracht und erstreckt sich die Hülse abschnittsweise in einem Aufnahmebereich in dem Handhabungsteil und ist verschieblich innerhalb des Aufnahmebereichs vorgesehen. Dadurch kann das Spektrometer einfach mit einer Hand an dessen Handhabungsteil gehalten werden, wobei eine Bedienerperson mit der anderen Hand die Hülse bezüglich des Lichtleiters verschieben und dadurch die Messstrecke verändern kann. Es sei darauf hingewiesen, dass dieses Verschieben der Hülse bezüglich des Lichtleiters wie auch die Beweglichkeit der Lichtquelle und des Photodetektors zueinander in Stufen, beispielsweise mittels entsprechender Rasten, oder stufenlos vorgesehen sein kann.

Gemäß einer weiter bevorzugten Weiterbildung des erfindungsgemäßen Spektrometers weist das Endstück der Hülse eine Linse und den Photosensor auf. Vorzugsweise begrenzt die Linse die Messstrecke gegenüberliegend der Stirnseite des Lichtleiters. Weiter bevorzugt empfängt die Linse das Licht von der Stirnseite des Lichtleiters und fokussiert dieses auf den Photosensor. Das heißt, dass aus Sicht des Lichtleiters der Photosensor hinter der Linse angeordnet ist. Der Photosensor ist vorzugsweise als Photodiode ausgebildet. Photodioden wandeln Licht unter Ausnutzung des Photoeffekts in elektrischen Strom um.

Gemäß des erfindungsgemäßen Spektrometers koppelt die Lichtquelle den Lichtstrahl an der anderen Stirnseite des Lichtleiters ein. Demnach ist die Lichtquelle in dem Handhabungsteil angeordnet.

Gemäß einer weiter bevorzugten Weiterbildung des erfindungsgemäßen Spektrometers ist der Lichtleiter als ein Acrylstab, Macrolonstab, Glasstab oder Glasfaserkabel ausgebildet. Derartige Glasfaserkabel sind einfach erhältlich und zeichnen sich weiterhin dadurch aus, dass sie beispielsweise innerhalb des Handhabungsteils auch auf nicht geradem Wege zu der Lichtquelle geführt werden können.

Gemäß einer weiter bevorzugten Weiterbildung des erfindungsgemäßen Spektrometers sind eine erste und eine zweite Lichtquelle zum wahlweise Erzeugen des Lichtstrahls mit einer ersten oder zweiten Wellenlänge/Wellenlängenbereich vorgesehen. Die ersten und zweiten Wellenlängen sind voneinander unterschiedlich. Gleiches gilt für die Wellenlängenbereiche. Jedoch können sich die Wellenlängenbereiche überlappen. Je nach Fluidprobe bzw. je nach Analyt, dessen Konzentration zu messen ist, kann es erforderlich sein, dass unterschiedliche Wellenlängen bzw. unterschiedliche Wellenlängenbereiche erforderlich sind, um eine entsprechende Messung durchzuführen. Ob nun die erste oder zweite Lichtquelle den Lichtstrahl erzeugt, kann beispielsweise manuell von einem Benutzer eingestellt werden. Alternativ kann die Einstellung automatisiert mittels einer Steuereinrichtung des Spektrometers erfolgen. Insbesondere kann die Wahl zwischen der ersten oder zweiten Lichtquelle in Abhängigkeit von einem an späterer Stelle noch näher beschriebenen ausgewählten Auswertemodus erfolgen. Selbstverständlich können auch mehr als zwei Lichtquellen vorgesehen sein. Vorzugsweise emittieren die eine oder mehreren Lichtquellen nahezu monochromatisches Licht mit einem Wellenlängenbereich von 250-5000 nm.

Gemäß einer weiter bevorzugten Weiterbildung des erfindungsgemäßen Spektrometers sind die eine oder mehreren Lichtquellen als Leuchtdioden, insbesondere als Laserdioden ausgebildet. Eine Laserdiode ist eine Leuchtdiode (LED), welche Laserstrahlung erzeugt.

Gemäß einer weiter bevorzugten Weiterbildung des erfindungsgemäßen Spektrometers ist eine Steuereinrichtung vorgesehen, welche in einem ersten Schritt die eine oder mehreren Lichtquellen sowie den Photosensor ansteuert, um eine Charakteristik der Fluidprobe zu ermitteln, in einem zweiten Schritt einen von mehreren auf einem Speicher des Spektrometers gespeicherten Auswertemodi in Abhängigkeit von der Charakteristik auswählt und in einem dritten Schritt die eine oder mehreren Lichtquellen sowie den Photosensor in Abhängigkeit von dem ausgewählten Auswertemodus ansteuert. Ein Auswertemodus enthält vorliegend eine oder mehrere Anweisungen, um die Konzentration eines Analyts in der Fluidprobe auf anerkannte, wiederholbare und vergleichbare Weise zu bestimmen. Diese Anweisungen können beispielsweise die Kalibrierung oder die Wellenlänge des zu verwendenden Lichtstrahls definieren. Mit der "Charakteristik" ist insbesondere ein charakteristisches Absorptionsspektrum des Fluids oder des Analyts in dem Fluid gemeint, welches auch als "spektraler Fingerabdruck" bezeichnet wird.

Gemäß einer weiter bevorzugten Weiterbildung des erfindungsgemäßen Spektrometers ist dieses portabel ausgebildet. Das heißt, dass das Spektrometer derartige Abmessungen aufweist, die ein manuelles Tragen und Handhaben des Spektrometers ermöglicht und dass das Spektrometer nicht mit einem Tisch, beispielsweise einem Labortisch, oder einem sonstigen Träger verbunden sein muss.

Gemäß einer weiter bevorzugten Weiterbildung des erfindungsgemäßen Spektrometers ist dieses netzunabhängig ausgebildet. Damit ist gemeint, dass der Spektrometer keinen Stromanschluss an ein Stromnetz benötigt, sondern eine in dem Spektrometer integrierte Energiequelle aufweist. Bei der in dem Spektrometer integrierten Energiequelle kann es sich um eine Batterie oder einen Akku handeln.

Weiterhin wird in einer Ausführungsform eine Verwendung des Spektrometers zur Bestimmung eines Volumens eines Fluids (nachfolgend als erstes Fluid bezeichnet) in einem Gefäß bereitgestellt.

Unter einem "Gefäß" ist vorliegend jede Art von Aufnahme zu verstehen, um ein Fluid definierten Volumens aufzunehmen. Demnach umfasst der Begriff "Gefäß" vorliegend jede Art von Behältnis, Teichbegrenzung usw..

Dazu wird zunächst ein zweites Fluid mit einem bekannten Volumen und einer bekannten Konzentration eines Analyts in das Gefäß gegeben, welches sich daraufhin mit dem ersten Fluid vermischt.

Hiernach wird die Konzentration des Analyts in dem Gemisch aus dem ersten und zweiten Fluid mittels des Spektrometers gemessen.

Anschließend ermittelt das Spektrometer auf Grundlage der Konzentration des Analyts in dem Gemisch das Volumen des ersten Fluids. Dazu wird zuvor das bekannte Volumen des zweiten Fluids und die bekannte Konzentration des Analyts in dem zweiten Fluid dem Spektrometer bereitgestellt. Die Konzentration des Analyts in dem zweiten Fluid kann auch mit dem Spektrometer ermittelt werden.

Weiterhin wird in einer nicht beanspruchten Ausführungsform ein portables küvettenloses Tauchspektrophotometer zur Bestimmung von Analyten-Konzentrationen in Fluidproben mit

a) einer Lichtquelle und einem Photodetektor, die auf einer gemeinsamen optischen Achse angeordnet sind, wobei die Lichtquelle aus mehreren Licht unterschiedlicher Wellenlänge emittierenden Dioden (LED-Array) besteht, die im wesentlichen parallel zur optischen Achse angeordnet sind,
b) einer Steuer/Auswerteeinrichtung, welche die Analyten-Konzentration in der Fluidprobe aufgrund der von dem Photodetektor gelieferten Messwerte ermittelt,
bei dem
c) die Lichtquelle und der Photodetektor auf oder in einem ausreichend verwindungs- und biegesteifen Trägersystem angeordnet sind und zwischen sich eine küvettenlose Messstrecke definieren, die durch Eintauchen des Spektrophotometers in die zu messenden Fluidprobe selbständig gefüllt wird, wobei die Lichtquelle und/oder der Photodetektor im Strahlengang relativ zueinander bewegbar sind, und
d) das portable Spektrophotometer mit einer netzunabhängigen Stromversorgung und einer digitalen Anzeigeeinrichtung für das Messergebnis versehen ist,
bereitgestellt.

"Fluid" ist der Oberbegriff für Flüssigkeiten und Gase.

Das Trägersystem für die Lichtquelle und den Photodetektor kann z.B. eine Schiene oder ein Stab aus einem Kunststoff ausreichender Verwindungs- und Biegesteifigkeit sein. Geeignete Kunststoffe lassen sich durch einfache Versuche ermitteln. Das gleiche gilt auch für geeignete Abmessungen des Trägersystems. Es ist klar, dass die Materialeigenschaften und die Abmessungen des Trägersystems sich gegenseitig beeinflussen. Wenn also ein Material z.B. eine hohe Biegesteifigkeit hat, kann z.B. eine Trägerschiene daraus dünner sein. Das Trägersystem kann z.B. auch rohr- bzw. stiftförmig sein. Lichtquelle und Photodetektor können dann z.B. auf der Innenseite des Rohres oder Stiftes angeordnet sein.

Vorzugsweise emittieren die LEDs der Lichtquelle nahezu monochromatisches Licht im Wellenlängenbereich 200 bis 1000 nm, z.B. 250-750 nm oder 900 nm. Bei Messungen in Gasen können die Messwellenlängen auch im Bereich 1.000 bis 5.000 nm liegen. Grundsätzlich lassen sich alle Messwellenlängen realisieren, die für ein bestimmtes Messproblem zweckdienlich oder erwünscht sind. Es kann sich um mehrere unterschiedliche LEDs handeln, z.B. in Form eines LED-Arrays, deren Emissionswellenlängenbereiche unterschiedlich sind, sich aber auch teilweise überlappen können. Die Wellenlängenbereiche hängen dabei von dem zu bestimmenden Analyten ab. LEDs oder LED-Arrays mit geeigneten Wellenlängenbereichen und geeigneter Dimensionierung sind im Handel erhältlich. Da das Spektralphotometer zum Messen in die Fluidprobe eingetaucht wird, befindet sich die Lichtquelle (z.B. LED oder LED-Array) in einem gegen Eindringen des Fluids abgedichteten und gegen das Fluid resistenten Gehäuse geeigneter Dimensionierung.

Als Photodetektor dient z.B. eine Photodiode. Photodioden mit geeigneter Empfindlichkeit, spektraler Bandbreite und geeigneter Dimensionierung sind im Handel erhältlich. Da das Spektralphotometer zum Messen in Fluidprobe eingetaucht wird, befindet sich der Photodetektor in einem gegen Eindringen des Fluids abgedichteten und gegen das Fluid resistenten Gehäuse geeigneter Dimensionierung.

In dem Strahlengang zwischen Lichtquellen und Photodetektor befinden sich ein oder mehrere optische Elemente, um das Licht des Emitters effizient auf den Photodetektor zu lenken. Diese können als optische Linsen oder eine Anordnung von Linsen oder als optische Spiegel oder eine Kombination aus Spiegeln und Linsen ausgeführt sein.

Um die spektrale Reinheit des von den Emittern ausgesendeten Lichtes zu erhöhen, können sich in Strahlengang zwischen Emitter und Photodetektor schmalbandige optische Filter befinden.

Vorzugsweise sind im Strahlengang zwischen Lichtquelle und Photodetektor Blenden zum Ausfiltern von gestreutem oder reflektiertem Licht angeordnet. Die Blenden können in das fluiddichte Gehäuse des Photodetektors integriert sein. Im einfachste Fall handelt es sich um eine Lochblende, bei der das einfallende Licht von der Lichtquelle durch ein für Licht der gewählten Wellenlänge durchlässiges Fenster fällt, z.B. ein Fenster aus Quarzglas oder aus einem UV-durchlässigen Kunststoff. Auch die Lichtquelle kann mit einer derartigen Blende versehen werden, wenn dies erforderlich oder gewünscht ist.

Der Photodetektor ist mit einem Analog-Digitalwandler verbunden, der die aufgenommenen analogen Messdaten digitalisiert und so in eine elektronisch verarbeitbare Form bringt. Ein programmierbarer Mikroprozessor übernimmt die Steuerung des Spektralphotometers, z.B. die Ansteuerung der LEDs, des Analog-Digitalwandlers und der digitalen Anzeigeeinrichtung, die Kalibrierung bzw. Eichung, sowie die Auswertung der Messergebnisse, z.B. die Bestimmung der Analyten-Konzentration aus der gemessenen Extinktion bei einer bestimmten Messwellenlänge bzw. aus den gemessenen Extinktionen bei einer oder mehreren festgelegten Messwellenlängen, dem bekannten molaren dekadischen Extinktionskoeffizienten und der bekannten Schichtdicke der Fluidprobe. Die Messwerte können in eine geeignete Einheit umgerechnet und alphanumerisch von der digitalen Anzeigeeinrichtung angezeigt werden. Geeignete Analog-Digitalwandler, digitale Anzeigeeinrichtungen und programmierbare Mikroprozessoren oder -controller sind im Handel erhältlich und bedürfen keiner weiteren Erläuterung

Das Spektralphotometers ist aufgrund seiner geringen Abmessungen und der netzunabhängigen Stromversorgung (z.B. über eine Batterie) besonders für den Außeneinsatz, d.h. außerhalb des Labors, geeignet. Die einfache Bedienbarkeit (gemessen wird durch Eintauchen in die Fluidprobe) in Verbindung mit der automatischen Auswertung macht es besonders auch für Laienanwender geeignet, beispielsweise bei der Abwasseruntersuchung in Drittweltländern oder zur Überwachung von Schwimmbadwasser.

Ein Vorteil des Spektralphotometers ist, dass die Lichtquelle und der Photodetektor im Strahlengang im Bereich 0,5 - 5 cm relativ zueinander bewegbar sind, so dass Schichtdicken von 0,5 cm bis 5 cm eingestellt werden können. Beispielsweise können Lichtquelle und Photodetektor auf dem Trägersystem auf Schienen gegeneinander verschiebbar sein. Alternativ kann das Trägersystem selbst teleskopartig verlänger- oder verkürzbar sein, beispielsweise mit Hilfe eines Federmechanismus mit entsprechend beabstandeten Arretierungen. Bei einem rohr- oder stiftförmigen Trägersystem könnte ein geeignetes Schraubengewinde eingesetzt werden, das je nach gewünschter Schichtdicke rein- oder rausgedreht wird. Grundsätzlich bestehen hier keine besonderen Beschränkungen solange der eingestellte Abstand und damit die Schichtdicke hinreichend genau eingestellt werden kann und dies auch bleibt. Der genaue eingestellte Abstand kann beispielsweise mit einer normgefärbten Lösung durch Messen von deren Extinktion und Vergleich mit deren bekannten Extinktion und Konzentration mit Hilfe des Lambert-Beerschen Gesetzes bestimmt werden.

Daher können anders als bei bekannten Geräten leicht variable, z.B. größere, Schichtdicken eingestellt werden, was bei sehr niedrigen Messkonzentrationen erwünscht sein kann. Umgekehrt kann bei sehr hohen Messkonzentrationen leicht eine kleinere Schichtdicke eingestellt werden. Bei den bekannten Geräten müssten mehrere Küvetten mit unterschiedlichen Schichtdicken mitgeführt werden, um bei einem Außeneinsatz auf alle Eventualitäten vorbereitet zu sein. Selbstverständlich könnten auch Schichtdicken unterhalb 0,5 cm oder oberhalb 5 cm eingestellt werden, da physikalisch grundsätzlich nichts dagegen spricht. Es handelt sich hierbei nur um den Bereich, in dem handelsübliche Küvetten dimensioniert sind.

Zu stark konzentrierte Proben können, anstatt die Schichtdicke zu verringern, natürlich auch verdünnt werden. Ebenso kann der Strahlengang durch die Fluidprobe bei zu geringer Konzentration auch durch ein Spiegelsystem verlängert werden.

Das portable Spektrophotometer eignet sich zur Messung der unterschiedlichsten Fluide. Bei der Fluidprobe kann es sich z.B. um ein Gas, eine Flüssigkeit (z.B. auch eine Körperflüssigkeit wie Serum) oder ein Gemisch (z.B. Nebel oder Rauch) daraus handeln. Die Art der Meßwertbestimmung erlaubt es auch zu einem gewissen Grad, trübe Fluidproben (d.h. dünne Suspensionen aus Feststoffen in Fluiden) zu vermessen, wie etwa trübe Probenwässer, Porenwässer, Deponiewässer, Abwasser, Suspensionen aus Bodenproben und Düngemittel. Vorzugsweise wird das portable Spektrophotometer zur Bestimmung der Konzentration von gelösten Wasserinhaltsstoffen eingesetzt. Die Wasserprobe kann beispielsweise aus einem Aquarium, Gartenteich oder Schwimmbad stammen. In Bezug auf die Herkunft des Wasser gibt es keine Beschränkungen.

Beispiele für mit dem portable Spektrophotometer bestimmbare Wasserinhaltsstoffe sind Sauerstoff, Ozon, Chlor (freies Chlor, Gesamtchlor), Stickstoffverbindungen (Gesamtstickstoff), Kalium, Eisen, Zink, Schwermetalle, Ammonium, Cyanursäure, Cyanid, Harnstoff, Carbonat (Wasserhärte), Wasserstoffperoxid, Chlorid, Nitrit, Nitrat oder Phosphat. Insbesondere kann mit dem portablen Spektrophotometer auch der pH-Wert einer Wasserprobe bestimmt werden. Dazu wird diese mit z.B. einem einkomponentigen Indikator wie Phenolrot oder mit einem zweikomponentigen Mischindikator (z.B. Bromthymolblau/Thymolblau) versetzt, der dann photometrisch vermessen wird. Der verwendete Indikator wird vom Gerät automatisch erkannt.

Selbstverständlich können mit dem portablen Spektrophotometer auch nephelometrische Trübungsmessungen durchgeführt werden.

Das portable Spektrophotometer kann auch zur Nährstoffkontrolle von Böden in der Land- und Forstwirtschaft verwendet werden.

Das portable Spektrophotometer eignet sich ferner zur Messung von Gasproben, z.B. zur Bestimmung der Konzentration von Kohlenmonoxid, Kohlendioxid, Wasser oder Alkoholen oder Stäuben in der Luft.

Geeignete Vorschriften (z.B. zur Probengewinnung, - vorbereitung und -handhabung, Standards, Nachweisreagenzien, geeignete Messwellenlängen etc.) zur photometrischen Bestimmung einer Vielzahl von Analyten in Wasser finden sich in z.B. "Deutsche Einheitsverfahren (DEV) zur Wasseruntersuchung", die dem Fachmann geläufig sind.

Ein weiterer Vorteil des portablen Spektrophotometers ist seine Kompatibilität zu handelsüblichen Schnelltests bzw. photometrischen Tests. Schnelltests für nahezu jeden Analyten, z.B. für Chlor, sind beispielsweise von den Firmen Fluka oder Merck erhältlich. Bei der Vermessung der bei solchen Schnelltests mitgelieferten Standards zur Kalibrierung bzw. Eichung erkennt das portable Spektrophotometer mit Hilfe einer entsprechend programmierten Datenbank, die z.B. das charakteristische Absorptionsspektrum als spektralen "Fingerabdruck" enthält, automatisch das einzusetzende Messverfahren (z.B. die geeignete Messwellenlänge). Das gewählte Messverfahren wird auf der digitalen Anzeigeeinrichtung des portablen Spektrophotometers angezeigt. Selbstverständlich ist es aber auch möglich, das einzusetzende Messverfahren manuell zu wählen. Herstellerbedingte Variationen eines bestimmten Standards werden ebenfalls in der Datenbank berücksichtigt und ggf. korrigiert.

Eine Ausführungsform des portablen Spektrophotometers besteht im wesentlichen aus den folgenden Bausteinen:

- Einer Lichtquelle in Form eines Arrays aus LEDs (z.B. Typ: OP291A, HLMP-CM36, L-7113UVC, L-53SRC-DV), von dem jede Leuchtdiode einzeln angesteuert werden kann. Zur Strombegrenzung sind jeweils Vorwiderstände eingebaut.

- Einem Photodetektor in Form einer Photodiode (z.B. Typ: FH229) mit Auswertschaltung. Die Photodiode ist mit einem Operationsverstärker (z.B. Typ: MCP 6001-E/OT) so beschaltet, dass der von der Photodiode erzeugte Ausgangsstrom Iphoto in eine zu dem Strom lineare Spannung Uphoto = Iphoto*10000*V/A umgewandelt wird. Die so erhaltene Spannung ist direkt proportional zu der auf die Photodiode fallenden Lichtintensität. Die Spannung Uphoto wird auf den Eingang eines 18 Bit Delta Sigma Analog-zu-Digital-Wandlers (z.B. Typ: MCP 3421A0T-E/OT) gegeben und von diesem in ein digitales Signal umgewandelt. Der AD-Wandler hat bereits intern noch einmal eine über Software einstellbare Verstärkung von 1- bis 8-fach. Bei Bedarf kann damit der Messbereich angepasst werden.

- Einem Mikroprozessor bzw. Mikrocontroller (z.B. Typ: PIC18F1220), der die Ansteuerung der LEDs und des AD-Wandlers übernimmt, den Messablauf steuert und die Messwerte in Klartext und in eine geeignete Einheit umgerechnet auf einem Display ausgibt.

- Einem Display, auf dem die Messwerte alphanumerisch ausgegeben werden können.

- Einem Step-Up-Spannungswandler (z.B. Typ: XC9119D10AMR), der die Elektronik im Messbetrieb mit stabilisierten 5V-Spannung versorgt. Befindet sich das Gerät im Standby, wird die unstabilisierte Batteriespannung der CR2032-Knopfzelle (etwa 3V, Typ lediglich beispielhaft) zur Versorgung des Prozessors verwendet. Um Strom zu sparen, ist im Standby die gesamte Peripherie (Photodiode, A/D-Wandler und Display) stromlos.

Der mechanische Aufbau ähnelt bei einer Ausführungsform einem Stift, wobei der größte Teil der Vorderseite von dem Display eingenommen wird. Einige wenige Taster ermöglichen das Einstellen des zu messenden Parameters und das Auslösen einer Messung.

Eine Kalibrierung des portablen Spektrophotometers kann wegen des küvettenlosen Betriebs entfallen, da anders als bei bekannten Geräten keine sich ändernden Küvetten verwendet werden.

Das LED-Array und die Photodiode zur Absorptionsmessung befinden sich auf zwei zueinander planparallelen Flächen der Messzelle, so dass das Messvolumen direkt durchstrahlt wird, und das transmittierte Licht auf die Photodiode fällt. Um Umgebungslicht und Licht der LEDs, das innerhalb der Messzelle reflektiert wird, abzuschirmen, sind einfache Blenden vorgesehen.

Messung

Ausgegangen wird von einer Ionenkonzentration C(Ion) in der zu untersuchenden Lösung.

In einen ersten Schritt wird durch die Zugabe eines Nachweisreagenz aus den Ionen ein Farbstoffkomplex gebildet. Das Nachweisreagenz wird hierbei im Überschuss in die Lösung gegeben, so dass eine vollständige Umsetzung aller nachzuweisenden Ionen in den Farbstoffkomplex gegeben ist. In der Reaktion

Ion + Nachweisreagenz -> Farbstoffkomplex + Nachweisreagenz liegt das Reaktionsgleichgewicht auf der rechten Seite.

Die Menge des gebildeten Farbstoffe steht damit in linearem Zusammenhang mit der Konzentration der Ionen:

$$C(Farbstoff) = A * C(Ion)$$

Der gebildete Farbstoff zeigt charakteristische Absorptionsbanden, die je nach verwendetem Nachweisreagenz vom Infrarotbereich bis in den ultravioletten Bereich reichen. Es muss nicht im Absorptionsmaximum gemessen werden (sog. Lambda-max-Messung). Indem die Probe mit dem Licht einer geeignet gewählten LED durchstrahlt wird, lässt sich die Absorption des Farbstoffes messen, und über das Lambert-Beersche Gesetz die Farbstoff- und damit auch die Ionenkonzentration berechnen.

In folgenden ist:

I0 die von der Photodiode empfangene Intensität der LED ohne Farbstoffkomplex
I die von der Photodiode empfangene Intensität der LED mit Farbstoffkomplex
a gibt an, wie empfindlich die Photodiode auf das Licht der LED reagiert
b drückt das spezifische Absorptionsverhalten des Farbstoffes aus
(a und b sind wellenlängenabhängig)

Das Lambert-Beersche Gesetz

$$I/I0 = -exp (-b * C(Farbstoff))$$

gibt die Abschwächung des transmittierten Lichts als Funktion der Ionenkonzentration an.

Ist die Transmittivität

$$T = I/I0$$

bekannt, kann daraus auf die Ionenkonzentration C(Ion) geschlossen werden:

$$C(Ion) = C(Farbstoff)/A = -1/(A*b) * ln(T)$$

Die von der Photodiode empfangene Helligkeit setzt sich aus zwei Bestandteilen zusammen: Aus dem durch die Messzelle gestrahlten Licht der LED und aus dem seitlich eingestrahlten Licht der Umgebung. Die Photospannung, die der A/D-Wandler umwandelt, verhält sich also folgendermaßen:

$$U\_photo = a * (I(Umgebung) + I(LED))$$

Dabei ist a ein Proportionalitätsfaktor, der von der Empfindlichkeit der LED, dem optischen Aufbau und der elektrischen Verstärkung des Photostroms abhängig ist.

Durch eine Dunkelmessung mit abgeschalteter LED

$$U\_photo\_dunkel = a * I(Umgebung)$$

und der Subtraktion von der Photospannung mit eingeschalteter LED lässt sich bis auf den Faktor a die scheinbare Helligkeit der LED bestimmen:

7

$$U\_photo - U\_photo\_dunkel = a * I(LED)$$

$$\Rightarrow I(LED) * a = U\_photo - U\_photo\_dunkel$$

Um die Transmittivität zu bestimmen muss diese Messung zweimal durchgeführt werden: Einmal mit der zu untersuchenden Probe, in die allerdings noch keine Nachweisreagenz gegeben wurde, und einmal mit der mit Reagenz versetzten Probe.

Der erhaltene Wert für I(LED) * a OHNE Reagenz wird I0 genannt, der MIT Reagenz I.

Bei der Berechnung der Transmittivität T = I/I0 fällt der Faktor a weg.

Zusammengefasst erhält man:

$$C(Ion) = -\frac{1}{A \cdot b} \cdot \ln \frac{U_{photo,\,mit\,Farbstoff} - U_{photo,\,dunkel,\,mit\,Farbstoff}}{U_{photo,\,ohneFarbstoff} - U_{photo,\,dunkel,\,ohneFarbstoff}}$$

Es sei darauf hingewiesen, dass sich in der Konstanten a nicht nur die Empfindlichkeit der Photodiode für die verwendete Wellenlänge ausdrückt, sondern auch eine durch eine Trübung der Probe hervorgerufene Abschwächung des Lichts der LED und der Umgebung. Indem mit einer ersten Messung ohne Farbstoff die scheinbare Helligkeit der LED vermessen wird, kann dieser Faktor vollständig eliminiert werden, so dass auch leicht trübe Proben vermessen werden können.

<u>Bestimmung der Art des in der Probe enthaltenen Farbstoffes</u>

Da in dem Spektrometer verschieden farbige LEDs verbaut sind, ist es möglich das Absorptionsspektrum des Farbstoffes an mehreren Stellen abzutasten. Das so erhaltene Punktspektrum ist für jeden Farbstoff charakteristisch, und durch den Vergleich mit in einer Datenbank abgespeicherten Spektren kann auf den vorliegenden Farbstoff, und damit auch auf die nachzuweisenden Ionen geschlossen werden. Eine manuelle Eingabe, welche Ionen nachgewiesen werden sollen, entfällt damit.

Die Erfindung wird nachfolgend anhand von Ausführungsbeispielen unter Bezugnahme auf die beiliegenden Figuren der Zeichnung näher erläutert.

Es zeigen:

Fig. 1    schematisch ein Spektrometer gemäß einem Ausführungsbeispiel der vorliegenden Erfindung;

Fig. 2    in einer Draufsicht ein Spektrometer gemäß einem weiteren Ausführungsbeispiel der vorliegenden Erfindung, wobei die Hülse teilweise durchsichtig dargestellt ist;

Fig. 3    die Ansicht aus Fig. 2, wobei zusätzlich das Handhabungsteil teilweise durchsichtig dargestellt ist; und

Fig. 4    eine Seitenansicht aus Fig. 3.

In den Figuren bezeichnen gleiche Bezugsziffern gleiche oder funktionsgleiche Komponenten, soweit nichts Gegenteiliges angegeben ist.

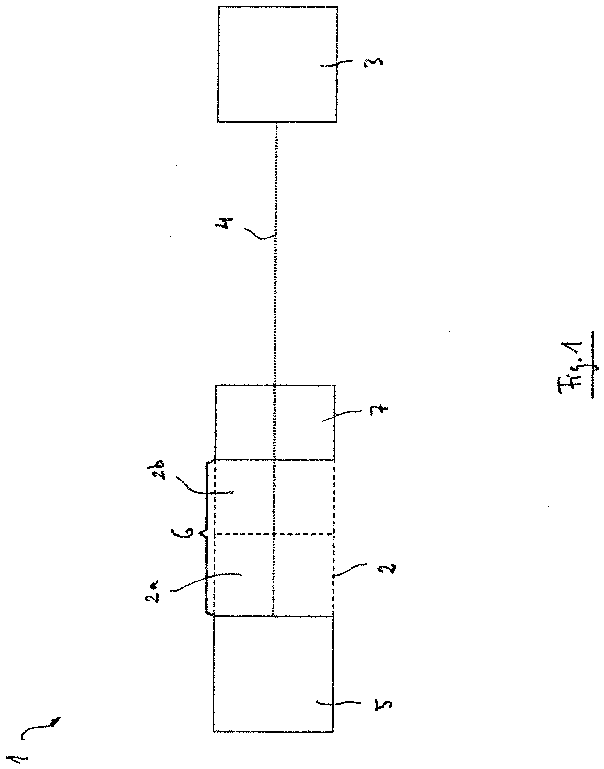

Fig. 1 zeigt schematisch ein Spektrometer 1 gemäß einem Ausführungsbeispiel der vorliegenden Erfindung.

Bei dem Spektrometer 1 handelt es sich um ein küvettenloses Spektrometer zum Messen der Konzentration wenigstens eines Analyts in einer Fluidprobe 2.

Das Spektrometer 1 weist eine Lichtquelle 3 zum Erzeugen eines Lichtstrahls 4 auf.

Ferner weist das Spektrometer 1 einen Photosensor 5 zum Empfangen des Lichtstrahls 4 auf.

Darüber hinaus weist das Spektrometer 1 eine Messstrecke 6 im Strahlengang des Lichtstrahls 4 auf. In die Messstrecke 6 ist die Fluidprobe 2 eingebracht, wobei sich anhand der Messstrecke 6 das Volumen der eingebrachten Fluidprobe 2 bestimmt. Mit anderen Worten gibt die Messstrecke 6 eine Schichtdicke der Fluidprobe 2 vor, welche der Lichtstrahl 4 durchdringen muss, um von der Lichtquelle 3 zu dem Photosensor 5 zu gelangen.

Die Messstrecke 6 ist veränderlich vorgesehen, um dadurch das Volumen der einbringbaren bzw. der eingebrachten Fluidprobe 2 zu verändern. Dadurch können auch Analyten in sehr niedriger oder sehr hoher Konzentration in der Fluidprobe 2 bestimmt werden. Beispielsweise wird die Messstrecke 6 in dem Fall, dass es sich um einen Analyten handelt, welcher in nur sehr niedriger Konzentration in der Fluidprobe vorhanden ist, vergleichsweise groß vorgesehen.

Mittels Veränderns der Messstrecke 6 kann beispielsweise ein Ausgangsvolumen 2a der Fluidprobe 2 um ein Zusatzvolumen 2b vergrößert werden. Die Volumina 2a und 2b sind in Fig. 1 oben und unten jeweils von einer gestrichelten Linie und links und rechts jeweils von einer durchgezogenen Linie begrenzt dargestellt, wobei eine senkrecht gestrichelte Linie die beiden Volumina 2a und 2b voneinander trennt.

Das Verändern der Messstrecke 6 kann nun auf verschiedene Art und Weise erfolgen:

Gemäß dem vorliegenden Ausführungsbeispiel ist ein Lichtleiter 7 vorgesehen, welcher im Strahlengang des Lichtstrahls 4 angeordnet ist. Die Messstrecke 6 wird zwischen dem Lichtleiter 7 und dem Photosensor 5 definiert. Somit kann die Messstrecke 6 entweder dadurch verändert werden, dass der Photosensor 5 bezüglich des Lichtleiters 7 oder der Lichtleiter 7 bezüglich des Photosensors 5 bewegt wird.

Alternativ ist in einer nicht beanspruchten Ausführungsform auch denkbar, dass die Messstrecke 6 direkt zwischen dem Photosensor 5 und der Lichtquelle 3 definiert wird, also auf den Lichtleiter 7 verzichtet wird. Sodann wird die Messstrecke 6 dadurch verändert, dass entweder der Photosensor 5 bezüglich der Lichtquelle 3 oder die Lichtquelle 3 bezüglich des Photosensors 5 bewegt wird.

Die vorstehend beschriebenen Bewegungen beziehen sich auf eine Bewegung entlang des Strahlengangs des Lichtstrahls 4.

Ferner könnten in einer nicht beanspruchten Ausführungsform der Photosensor 5 und die Lichtquelle 3 in dem Ausführungsbeispiel nach Fig. 1 auch vertauscht sein, das heißt, dass die Messstrecke 6 zwischen der Lichtquelle 3 und dem Lichtleiter 7 definiert wird.

Das beschriebene Spektrometer 1 kommt somit völlig ohne die einleitend beschriebenen Küvetten aus, d.h., es wird insbesondere keine Küvette zum Messen der Konzentration des Analyts benötigt. Es handelt sich daher um ein küvettenloses Spektrometer 1.

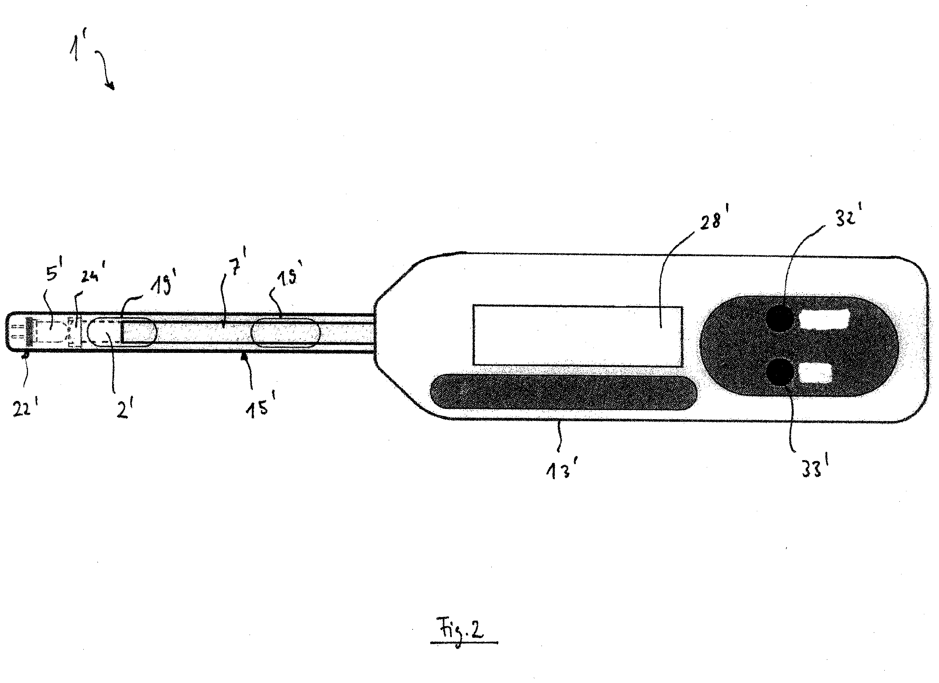

Nachfolgend wird im Zusammenhang mit den Fig. 2-4 ein Spektrometer 1' beschrieben, für welches die Ausführungen zu Fig. 1 entsprechend gelten.

Das küvettenlose Spektrometer 1' dient zum Messen der Konzentration wenigstens eines Analyts in einer Fluidprobe 2'. Die Fluidprobe 2' ist in Fig. 2 oben und unten durch eine gestrichelte Linie und seitlich durch jeweils zwei durchgezogene Linien begrenzt dargestellt.

Bei der Fluidprobe 2' kann es sich um ein Gas, eine Flüssigkeit oder ein Gemisch daraus handeln. Die Fluidprobe 2 kann außerdem auch einen gewissen Feststoffanteil enthalten, beispielsweise Staub.

Bei dem Analyt handelt es sich vorzugsweise um einen bevorzugt in Wasser gelösten Inhaltsstoff. Beispiele für derartige Inhaltsstoffe sind Sauerstoff, Ozon, Chlor (freies Chlor, Gesamtchlor), Stickstoffverbindungen (Gesamtstickstoff), Magnesium, Calcium, Kupfer, Kalium, Eisen, Zink, Schwermetalle, Ammonium, Cyanursäure, Cyanid, Harnstoff, Carbonat (Wasserhärte), Wasserstoffperoxid, Chlorid, Nitrit, Nitrat oder Phosphat. Genauso kann es sich bei der Fluidprobe 2' aber auch um ein Gas, insbesondere Luft handeln. Mittels des Spektrometers 1' kann beispielsweise die Konzentration von Kohlenmonoxid, Kohlendioxid, Wasseranteile, Alkohole, Trübungen, Stäuben in der Luft gemessen werden. Beispielsweise kann es sich bei den Fluidproben 2' auch um Bodenproben oder Düngemitteln handeln. Auch die Messung eines pH-Werts in der Fluidprobe 2' mittels des Spektrometers 1' ist möglich.

In Abhängigkeit von der Fluidprobe 2' und/oder des Analyts kann es erforderlich sein, zunächst einen Indikator im Überschuss in die Fluidprobe 2' bzw. in das Fluid 20' zu geben. Beispielsweise kann zur Bestimmung eines pH-Werts die Fluidprobe 2' bzw. das Fluid 20' mit Phenolrot versetzt werden.

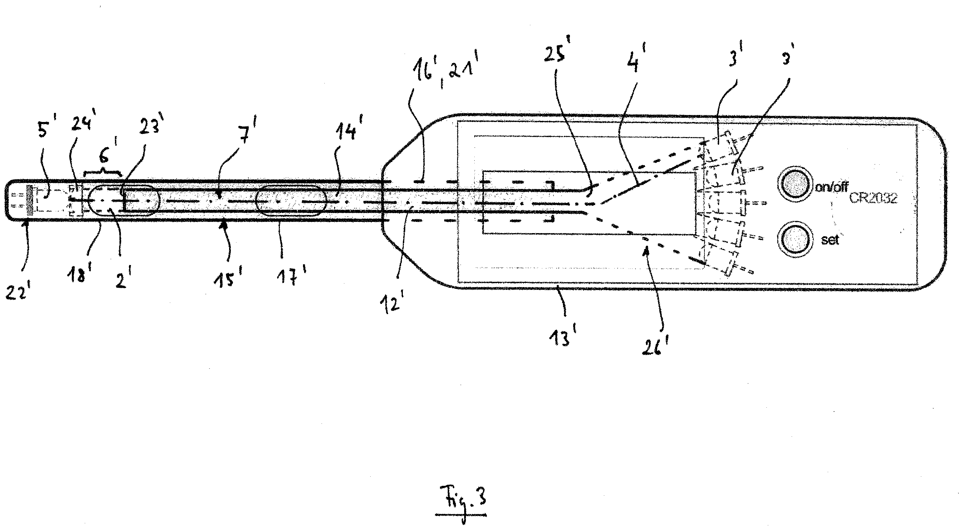

Das Spektrometer 1' weist mehrere Lichtquellen 3', siehe Fig. 3, auf. Bei den Lichtquellen 3' handelt es sich bevorzugt um LEDs, weiter bevorzugt Laser-LEDs. Die Lichtquellen 3' sind dazu eingerichtet, nahezu monochromatisches Licht mit einer Wellenlänge von bevorzugt 250-750 nm zu emittieren. Bevorzugt sind die Lichtquellen 3' dazu eingerichtet, jeweils Licht unterschiedlicher Wellenlängen bzw. unterschiedlicher Wellenlängenbereiche zu emittieren. Beispielsweise kann die eine Lichtquelle 3' dazu eingerichtet sein, Licht mit einer Wellenlänge zwischen 610 und 750 nm und die andere Lichtquelle 3' kann dazu eingerichtet sein, Licht mit einer Wellenlänge zwischen 590 und 610 nm zu emittieren. Die Wahl der jeweiligen Lichtquelle 3' kann von der Fluidprobe 2' und/oder der Analyt-Konzentration, welche es zu messen gilt, abhängen und auch automatisch ausgewählt werden, wie an späterer Stelle noch näher beschrieben.

Die eine oder mehreren Lichtquellen 3' erzeugen einen Lichtstrahl 4', welcher in Fig. 3 strichpunktiert angedeutet ist. Die mehreren Lichtquellen 3' können in etwa halbkreisförmig angeordnet sein und weiter bevorzugt ein Array ausbilden.

Das Spektrometer 1' weist weiterhin einen Photosensor 5' zum Empfangen des Lichtstrahls 4' auf. Der Photosensor 5' wandelt den auftreffenden Lichtstrahl 4' in elektrische Signale um. Die elektrischen Signale hängen jeweils von der auftreffenden Lichtleistung und/oder Wellenlänge des Lichtstrahls 4' ab. Bei dem Photosensor 5 handelt es sich bevorzugt um eine Photodiode.

Ferner ist das Spektrometer 1 mit einer Messstrecke 6' im Strahlengang des Lichtstrahls 4' ausgebildet. In die Messstrecke 6' ist die Fluidprobe 2' einbringbar, wobei sich anhand der Messstrecke 6' das Volumen der einbringbaren Fluidprobe 2' bestimmt, wie bereits im Zusammenhang mit Fig. 1 vorstehend erläutert.

Die Messstrecke 6' ist veränderlich vorgesehen, um dadurch das Volumen der einbringbaren Fluidprobe 2' zu verändern. Dazu ist das Spektrometer 1 beispielsweise wie folgt ausgebildet :

In dem Strahlengang des Lichtstrahls 4' ist ein Lichtleiter 7', beispielsweise in Form eines Acrylstabs, Macrolonstabs, Glasstabs oder Glasfaserkabels, angeordnet.

Der Lichtleiter 7' weist einen ersten Abschnitt 12', welcher fest in einem als Gehäuse ausgebildeten Handhabungsteil 13' untergebracht ist. Der Lichtleiter 7' weist weiterhin einen zweiten Abschnitt 14' auf, welcher sich aus dem Handhabungsteil 13' heraus in eine Hülse 15' erstreckt.

Die Hülse 15' weist einen im Wesentlichen ringförmigen Querschnitt auf. Der Innendurchmesser des ringförmigen Querschnitts der Hülse 15' entspricht im Wesentlichen dem Außendurchmesser des kreisförmigen Querschnitts des Lichtleiters 7'.

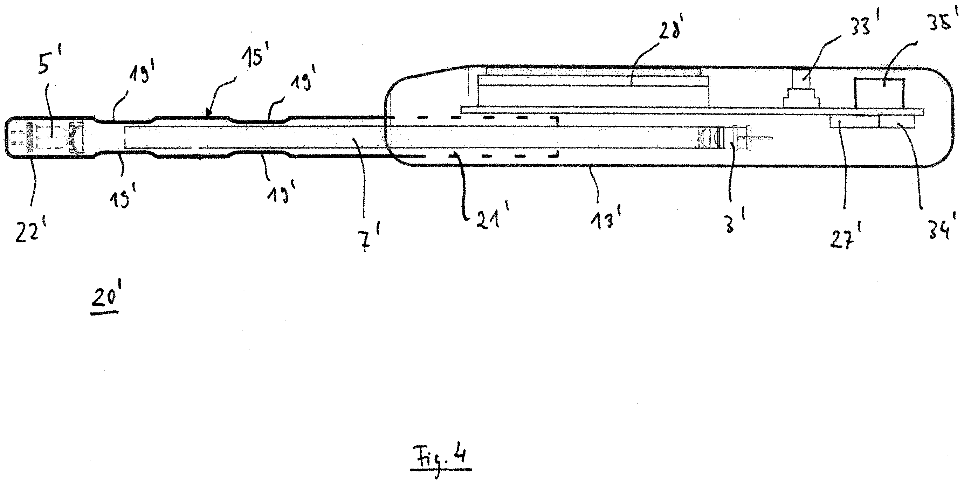

Die Hülse 15' ist bevorzugt mit mehreren Langlöchern 19' vorgesehen. Dabei können sich, wie in Fig. 4 gezeigt, jeweils zwei Langlöcher 19' gegenüberliegen. Weiterhin können beispielsweise zwei derartiger Paare von gegenüberstehenden Langlöchern 19' entlang des Strahlengangs des Lichtstrahls 4' voneinander beabstandet entlang der Hülse 15' vorgesehen sein. Unabhängig von der Stellung der Hülse 15' in Bezug auf das Handhabungsteil 13' bzw. den Lichtleiter 7' steht immer eines der Langlöcher 19' in Verbindung mit der Messstrecke 6', das heißt, dass die Fluidprobe 2' aus dem Fluid 20', beispielsweise einem Gewässer, entnommen werden kann. Eine derartige Probenentnahme kann gemäß dem vorliegenden Ausführungsbeispiel einfach durch Eintauchen der Langlöcher 19', damit also auch Eintauchen der Hülse 15' samt dem Endstück 22', in das Fluid 20' vorgenommen werden.

Die Hülse 15' weist einen ersten Abschnitt 16' auf, mit welchem sie sich in das Handhabungsteil 13' erstreckt. Der Abschnitt 16' ist entlang des Strahlengangs des Lichtstrahls 4' in dem Handhabungsteil 13' in einem Aufnahmeraum 21' desselben beweglich aufgenommen. Beispielsweise kann der Abschnitt 16' mit einem Außengewinde vorgesehen sein, welches in ein entsprechendes Innengewinde in dem Handhabungsteil 13' eingreift. Alternativ kann der Abschnitt 16' außenseitig mit Rasten vorgesehen sein, welche mit entsprechenden Gegenrasten in dem Handhabungsteil 13' in Eingriff steht und somit eine stufenweise Verschiebbarkeit der Hülse 15' bezüglich des Handhabungsteils 13' erlauben.

Ein zweiter Abschnitt 17' der Hülse 15' erstreckt sich nach außen aus dem Handhabungsteil 13' heraus und umgibt dabei den zweiten Abschnitt 14' des Lichtleiters 7'. An den zweiten Abschnitt 17' der Hülse 15' schließt sich ein dritter Abschnitt 18' der Hülse 15' an, welcher die Fluidprobe 2' an ihrem Umfang begrenzt. An den dritten Abschnitt 18' schließt sich wiederum ein Endstück 22' an. Das Endstück 22' verschließt den ringförmigen Querschnitt der Hülse 15' fluiddicht.

Die Messstrecke 6' wird somit zwischen dem Endstück 22' und einer Stirnseite 23' des Lichtleiters 7' definiert. Das Volumen der Fluidprobe 2' wird entlang des Strahlengangs des Lichtstrahls 4' von dem Endstück 22' und der Stirnseite 23' und, wie erwähnt, umfangsmäßig von dem dritten Abschnitt 18' der Hülse 15' begrenzt.

Das Endstück 22' weist den Photosensor 5' sowie bevorzugt eine Linse 24' auf, welche den einfallenden Lichtstrahl 4' auf den Photosensor 5' bündelt.

Indem nun die Hülse 15' aus dem Aufnahmebereich 21' des Handhabungsteils 13' hinein oder herausbewegt wird, wird die Messstrecke 6' eingestellt und kann somit einfach an die Anforderungen für eine Konzentrationsmessung eines jeweiligen Analyts angepasst werden. Denkbar ist hier auch, dass die Hülse automatisiert, beispielsweise mittels eines entsprechenden Stellmotors, aus dem Handhabungsteil 13' herein- und herausgefahren wird.

An der anderen Stirnseite 25' des Lichtleiters 7' wird der Lichtstrahl 4' eingekoppelt. Dabei können Mittel 26' vorgesehen sein, um wahlweise die eine oder die andere Lichtquelle 3' lichtleitend mit dem Lichtleiter 7' zu verbinden.

Das Spektrometer 1' weist weiterhin eine Steuereinrichtung 27', siehe Fig. 4, auf, welche die Lichtquellen 3' ansteuert. Weiterhin steuert die Steuereinrichtung 27' den Photosensor 5' an, beispielsweise um diesen zu kalibrieren. Außerdem führt der Photosensor 5' die von diesem erzeugten elektrischen Signale der Steuereinrichtung 27' zwecks Auswertung durch diese zu.

Weiterhin ist das Spektrometer 1 mit einer Anzeigeeinrichtung 28' zum Anzeigen beispielsweise der gemessenen Analyt-Konzentrationen ausgebildet. Ferner kann auf der Anzeigeeinrichtung 28' eine Menüauswahl dargestellt werden, mittels welcher ein Benutzer die Steuereinrichtung 27' bedienen kann.

Das Spektrometer 1' kann zusätzlich zu einem An-/Aus-Knopf 32' weitere Bedienelemente 33' aufweisen, mittels derer eine Steuerung des Menüs der Anzeigeeinrichtung 28' und eine entsprechende Auswahl ermöglicht wird.

Das Spektrometer 1' kann weiterhin einen Speicher 34' aufweisen, welcher beispielsweise in die Steuereinrichtung 27' integriert ist. Auf dem Speicher 34' können verschiedene Auswertemodi gespeichert sein. Beispielsweise kann ein Benutzer, welcher die Konzentration eines bestimmten Analyts bestimmen möchte, beispielsweise von Sauerstoff, mittels der Menüauswahl der Anzeigeeinrichtung 28' einen entsprechenden auf dem Speicher 34' gespeicherten Auswertemodi auswählen. Anschließend steuert die Steuereinrichtung 27' in Abhängigkeit von dem ausgewählten Auswertemodus die Lichtquellen 3' sowie den Photosensor 5' entsprechend an und nimmt entsprechende Auswertungen vor, die daraufhin auf der Anzeigeeinrichtung 28' dargestellt werden.

Zusätzlich oder alternativ kann auch eine Auswertung wie nachfolgend beschrieben erfolgen, wobei ein geeigneter Auswertemodus automatisiert ausgewählt wird: In einem ersten Schritt steuert die Steuereinrichtung 27' die mehreren Lichtquellen 3' sowie den Photosensor 5' an, um eine Charakteristik der Fluidprobe 2' zu ermitteln. Bei der Charakteristik handelt es sich beispielsweise um ein spezifisches Absorptionsspektrum der Fluidprobe 2'. In einem zweiten Schritt wird von der Steuereinrichtung 27' einer von mehreren auf dem Speicher 34' gespeicherten Auswertemodi in Abhängigkeit von der Charakteristik ausgewählt. Beispielsweise kann die ermittelte Charakteristik mit auf dem Speicher 34' gespeicherten Charakteristiken verglichen werden und bei einer entsprechenden Übereinstimmung der einer jeweiligen gespeicherten Charakteristik zugeordnete Auswertemodus ausgewählt werden. In einem dritten Schritt werden daraufhin die Lichtquellen 3' sowie der Photosensor 5' in Abhängigkeit von dem ausgewählten Auswertemodus angesteuert und entsprechende Auswertungen der Signale von dem Photosensor 5' vorgenommen.

Mittels der vorstehenden Verfahrensschritte kann also von dem Spektrometer 1 selbständig ermittelt werden, um welche Art von Fluidprobe 2' es sich handelt, beispielsweise ein Düngemittel, und daraufhin der dafür geeignete Auswertemodus ausgewählt werden, woraufhin die Konzentrationen der für die jeweilige Fluidprobe relevanten Analyten gemessen und auf der Anzeigeeinrichtung 28' dargestellt werden. Insbesondere die Auswahl einer bestimmten Lichtquelle 3' unter den mehreren Lichtquellen 3', welche für die Bestimmung der Konzentration eines bestimmten Analyts in der Fluidprobe 2' verwendet wird, kann in Abhängigkeit von dem Auswertemodus erfolgen.

Bevorzugt sind insbesondere die Steuereinrichtung 27', die Anzeige 28', die Bedienelemente 32', 33' sowie der Speicher 34' in dem Handhabungsteil 13' integriert und vor Umwelteinflüssen, insbesondere vor Flüssigkeit und Staub, geschützt untergebracht.

Außerdem weist das Handhabungsteil 13' eine Energiequelle 35' beispielsweise in Form eines Akkus auf, welche die elektrischen Komponenten 3', 5', 27', 28', 33' und 34' mit Energie versorgt.

Ferner kann das Spektrometer 1' eine Datenschnittstelle, beispielsweise einen USB-Anschluss oder einen RS-232-Anschluss, aufweisen, um das Spektrometer 1' bzw. die elektrischen Komponenten 3', 5', 27', 28', 33' und 34' desselben von extern zu steuern und/oder mit Energie zu versorgen.

Damit ergibt sich ein Aufbau für das Spektrometer 1', der es erlaubt, dieses einfach manuell zu transportieren und zu handhaben. Außerdem ist das Spektrometer 1' somit netzunabhängig. Selbstverständlich ist es natürlich genauso denkbar, das Spektrometer 1' mit Energie aus einem Stromnetz zu versorgen. Ferner kann das Spektrometer 1' auch stationär vorgesehen sein, beispielsweise zur Trübungsmessung in Rohren. Weiterhin kann das Spektrometer 1' als Signalgeber für automatische Titrationsstände in einem Labor verwendet werden.

In einer Ausgestaltung des Spektrometers 1' kann dieses mit folgenden elektronischen Komponenten ausgebildet sein:

- mehreren Lichtquellen 3' in Form eines Arrays aus LEDs (z.B. Typ: TSAL5300, MARL: 100041, HLMP-Y801, TLSH180P), von dem jede LED einzeln angesteuert werden kann; zur Strombegrenzung sind jeweils Vorwiderstände eingebaut;

- einem Photosensor 5' in Form einer Photodiode (z.B. Typ: OP950) mit Auswertschaltung; die Photodiode ist mit einem Operationsverstärker (z.B. Typ: OP07) so beschaltet, dass der von der Photodiode erzeugte Ausgangsstrom Iphoto in eine zu dem Strom lineare Spannung Uphoto ∝ Iphoto umgewandelt wird; die so erhaltene Spannung ist direkt proportional zu der auf die Photodiode fallenden Lichtintensität; die Spannung Uphoto wird auf den Eingang eines Analog-zu-Digital-Wandlers (z.B. Typ: AD7450) gegeben und von diesem in ein digitales Signal umgewandelt;

- einer Steuereinrichtung 27' in Form eines Mikroprozessor bzw. Mikrocontroller (z.B. Typ: MC9S08QG8CDTE), der die Ansteuerung der LEDs 3' und des AD-Wandlers übernimmt, den Messablauf steuert und die Messwerte in Klartext und in eine geeignete Einheit umgerechnet auf der Anzeigeeinrichtung 28' in Form eines Bildschirms ausgibt;

- einer Anzeigeeinrichtung 28', auf dem die Messwerte alphanumerisch ausgegeben werden können; und/oder

- einem Step-Up-Spannungswandler (z.B. Typ: NCP1400A), der die Elektronik im Messbetrieb mit stabilisierten 5V-Spannung versorgt; befindet sich das Spektrometer 1 im Standby, wird die unstabilisierte Batteriespannung der CR2032-Knopfzelle (etwa 3V, Typ lediglich beispielhaft) zur Versorgung des Prozessors verwendet; um Strom zu sparen, ist im Standby die gesamte Peripherie (Photodiode, A/D-Wandler und Display) stromlos.

Das Spektrometer 1, 1' kann dazu verwendet werden, das Volumen eines Fluids in einem Gefäß zu bestimmen. Konkret könnte sich die Bestimmung des Volumens eines Teichs wie folgt gestalten:

Zunächst wird ein Volumen von einem Liter Wasser abgemessen. In das Wasser wird ein Teelöffel einer Calciumionen enthaltenden Verbindung gegeben. Hiernach wird mittels des Spektrometers 1, 1' die Konzentration der Calciumionen in dem einen Liter Wasser bestimmt, welche nachfolgend als erste Konzentration bezeichnet wird.

Anschließend wird der Liter Wasser in einen Teich gegeben und eine gewisse Zeit abgewartet, bis sich die Calciumionen in dem Teich verteilt haben.

Daraufhin wird mittels des Spektrometers 1, 1' die Konzentration der Calciumionen in dem Teich ermittelt, welche nachfolgend als zweite Konzentration bezeichnet wird.

Hiernach wird ein definierter Auswertemodus des Spektrometers 1, 1' gestartet, welcher anhand der ersten und zweiten Konzentration sowie anhand des Volumens von einem Liter Wasser, das Volumen des Teichs bestimmt.

Somit können insbesondere Teichbesitzer auf einfache Weise das Volumen ihres Teichs bestimmen.

Obwohl die Erfindung vorliegend anhand bevorzugter Ausführungsbeispiele beschrieben wurde, ist sie darauf nicht beschränkt, sondern auf vielfältige Weise modifizierbar gemäß dem Schutzumfang der Patentansprüche.

**Bezugszeichenliste**

1, 1'   Spektrometer
2, 2'   Fluidprobe
2a   Volumen
2b   Volumen
3   Lichtquelle
3, 3'   Lichtquelle
4, 4'   Lichtstrahl
5, 5'   Photosensor
6, 6'   Messstrecke
7, 7'   Lichtleiter
12'   erster Abschnitt
13'   Handhabungsteil
14'   zweiter Abschnitt
15'   Hülse
16'   erster Abschnitt
17'   zweiter Abschnitt
18'   dritter Abschnitt
19'   Langloch
20'   Fluid
21'   Aufnahmebereich
22'   Endstück
23'   Stirnseite
24'   Linse
25'   Stirnseite
26'   Mittel
27'   Steuereinrichtung
28'   Anzeigeeinrichtung
32'   An-/Aus-Knopf
33'   Bedienelement
34'   Speicher
35'   Energiequelle

**Patentansprüche**

1. Küvettenloses Spektrometer (1; 1') zum Messen der Konzentration wenigstens eines Analyts in einer Fluidprobe (2; 2'),

    mit mindestens einer Lichtquelle (3; 3') zum Erzeugen eines Lichtstrahls (4; 4'),
    mit einem Photosensor (5; 5') zum Empfangen des Lichtstrahls (4; 4'), und
    mit einer Messstrecke (6; 6') im Strahlengang des Lichtstrahls (4; 4'), in welche die Fluidprobe (2; 2') einbringbar ist,
    wobei die Messstrecke (6; 6') veränderlich vorgesehen ist,
    mit einer Hülse (15'),
    mit einem Lichtleiter (7, 7') der in einem als Gehäuse ausgebildeten Handhabungsteil (13') des Spektrometers (1') fest angebracht ist, wobei Licht der Lichtquelle an einer ersten Stirnseite (25') des Lichtleiters (7') eingekoppelt wird, wobei der Lichtleiter (7') in die Hülse (15') hineinragt,
    wobei die Messstrecke (6') zwischen der anderen Stirnseite (23') des Lichtleiters (7') und einem die Hülse (15') verschließenden Endstück (22'), das den Photosensor (5') aufweist, gebildet und mittels Verschiebens der Hülse (15') veränderlich ist,

wobei die Hülse (15') wenigstens eine Öffnung (19') aufweist, welche das Einbringen der Fluidprobe (2') in die Messstrecke (6') erlaubt,

wobei sich die Hülse (15') abschnittsweise in einen Aufnahmebereich (21') in dem Handhabungsteil (13') erstreckt und verschieblich innerhalb des Aufnahmebereichs (21') angeordnet ist.

**2.** Spektrometer nach Anspruch 1,
**dadurch gekennzeichnet,**
**dass** entlang des Strahlengangs zwei der Öffnungen (19') voneinander beabstandet in der Hülse (15') vorgesehen sind.

**3.** Spektrometer nach einem der Ansprüche 1-2,
**dadurch gekennzeichnet,**
**dass** das die Hülse (5') verschließende Endstück (22') der Hülse (15') eine Linse (24') aufweist.

**4.** Spektrometer nach einem der Ansprüche 1-3,
**dadurch gekennzeichnet,**
**dass** der Lichtleiter (7') als ein Acrylstab, Macrolonstab, Glasstab oder Glasfaserkabel ausgebildet ist.

**5.** Spektrometer nach einem der vorangehenden Ansprüche,
**dadurch gekennzeichnet,**
**dass** eine erste Lichtquelle (3') und zumindest eine zweite Lichtquelle (3') zum wahlweise Erzeugen des Lichtstrahls (4') mit einer ersten oder zumindest zweiten Wellenlänge oder einem Wellenlängenbereich vorgesehen sind.

**6.** Spektrometer nach einem der vorangehenden Ansprüche,
**dadurch gekennzeichnet,**
**dass** die eine oder mehreren Lichtquellen (3') als Leuchtdioden, insbesondere als Laserdioden, ausgebildet sind.

**7.** Spektrometer nach einem der vorangehenden Ansprüche,
**dadurch gekennzeichnet,**
**dass** eine Steuereinrichtung (27') vorgesehen ist, welche in einem ersten Schritt die eine oder mehreren Lichtquellen (3') sowie den Photosensor (5') ansteuert, um eine Charakteristik der Fluidprobe (2') zu ermitteln, in einem zweiten Schritt einen von mehreren auf einem Speicher (34') des Spektrometers (1') gespeicherten Auswertemodus in Abhängigkeit von der Charakteristik auswählt und in einem dritten Schritt die eine oder mehreren Lichtquellen (3') sowie den Photosensor (5) in Abhängigkeit von dem ausgewählten Auswertemodus ansteuert.

**8.** Spektrometer nach einem der vorangehenden Ansprüche,
**dadurch gekennzeichnet,**
**dass** das Spektrometer portabel und/oder netzunabhängig ausgebildet ist.

**Claims**

**1.** Spectrometer (1; 1') without a cuvette for measuring the concentration of at least one analyte in a fluid sample (2; 2'),

having at least one light source (3; 3') for generating a light beam (4; 4'),
having a photosensor (5; 5') for receiving the light beam (4; 4'), and
having a measurement path (6; 6') in the beam path of the light beam (4; 4') and it is possible to introduce the fluid sample (2; 2') into said measurement path,
wherein the measurement path (6; 6') is provided in a variable manner,
having a sleeve (15'),
having a light conductor (7, 7') that is fixedly attached in a handling part (13') of the spectrometer (1'), and said handling part is embodied as a housing, wherein light of the light source is coupled to a first end face (25') of the light conductor (7'), wherein the light conductor (7') protrudes into the sleeve (15'),
wherein the measurement path (6') is formed between the other end face (23') of the light conductor (7') and an end piece (22') that closes the sleeve (15') and that comprises the photo sensor (5') and said measurement path can be varied by means of displacing the sleeve (15'),
wherein the sleeve (15') comprises at least one opening (19') that renders it possible to introduce the fluid sample (2') into the measurement path (6'),
wherein the sleeve (15') extends in sections into a receiving region (21') in the handling part (13') and is arranged in a displaceable manner within the receiving region (21').

2.  Spectrometer according to Claim 1,
    **characterised in that**
    two of the openings (19') are provided spaced from one another in the sleeve (15') along the beam path.

3.  Spectrometer according to one of claims 1-2,
    **characterised in that**
    the end piece (22') of the sleeve (15') that closes the sleeve (5') comprises a lens (24').

4.  Spectrometer according to one of claims 1-3,
    **characterised in that**
    the light conductor (7') is embodied as an acrylic rod, Makrolon rod, glass rod or fibre optic cable.

5.  Spectrometer according to one of the preceding claims,
    **characterised in that**
    a first light source (3') and at least one second light source (3') are provided so as to selectively generate the light beam (4') having a first or at least second wavelength or a wavelength range.

6.  Spectrometer according to one of the preceding claims,
    **characterised in that**
    the one or multiple light sources (3') are embodied as light diodes, in particular as laser diodes.

7.  Spectrometer according to one of the preceding claims,
    **characterised in that**
    a control device (27') is provided that in a first step actuates the one or multiple light sources (3') and also the photosensor (5') in order to determine a characteristic of the fluid sample (2'), in a second step said control device selects one of multiple evaluating modes that are stored on a storage device (34') of the spectrometer (1') in dependence upon the characteristic and in a third step said control device actuates the one or multiple light sources (3') and also the photosensor (5) in dependence upon the selected evaluating mode.

8.  Spectrometer according to one of the preceding claims,
    **characterised in that**
    the spectrometer is embodied in a portable manner and/or is independent of mains power.

**Revendications**

1.  Spectromètre sans cuvette (1 ; 1') destiné à la mesure de la concentration d'au moins un analyte dans un échantillon de fluide (2 ; 2'),

    avec au moins une source de lumière (3 ; 3') destinée à générer un rayon lumineux (4 ; 4'),
    avec un photocapteur (5 ; 5') destiné à la réception du rayon lumineux (4 ; 4'), et
    avec un tronçon de mesure (6 ; 6') dans le trajet du faisceau du rayon lumineux (4 ; 4'), dans lequel l'échantillon de fluide (2 ; 2') peut être introduit,
    le tronçon de mesure (6 ; 6') étant prévu variable, avec un fourreau (15'),
    avec un guide d'ondes optique (7, 7') qui est monté à demeure dans une partie de manipulation (13') du spectromètre (1') réalisée sous la forme d'un boîtier, de la lumière de la source de lumière étant injectée sur un premier côté frontal (25') du guide d'ondes optique (7'), le guide d'ondes optique (7') dépassant dans le fourreau (15'),
    dans lequel le tronçon de mesure (6') est formé entre l'autre côté frontal (23') du guide d'ondes optique (7') et un embout (22') fermant le fourreau (15'), qui comporte le photocapteur (5'), et est variable au moyen du déplacement du fourreau (15'),
    dans lequel le fourreau (15') comporte au moins une ouverture (19'), qui permet l'introduction de l'échantillon de fluide (2') dans le tronçon de mesure (6'),
    dans lequel le fourreau (15') s'étend en partie dans une zone de réception (21') dans la partie de manipulation (13') et est disposé de manière coulissante à l'intérieur de la zone de réception (21').

2. Spectromètre selon la revendication 1,
**caractérisé en ce**
**que**, le long du trajet du faisceau, deux des ouvertures (19') sont prévues, espacées l'une de l'autre, dans le fourreau (15').

3. Spectromètre selon l'une des revendications 1-2,
**caractérisé en ce**
**que** l'embout (22') du fourreau (15') fermant le fourreau (5') comporte une lentille (24').

4. Spectromètre selon une des revendications 1-3,
**caractérisé en ce**
**que** le guide d'ondes optique (7') est réalisé sous la forme d'une barre acrylique, d'une barre en Makrolon, d'une barre en verre ou d'un câble à fibres optiques.

5. Spectromètre selon l'une des revendications précédentes,
**caractérisé en ce**
**qu'**une première source de lumière (3') et au moins une seconde source de lumière (3') sont prévues pour générer au choix le rayon lumineux (4') avec une première ou au moins une seconde longueur d'onde ou une plage de longueurs d'onde.

6. Spectromètre selon l'une des revendications précédentes,
**caractérisé en ce**
**que** la ou les sources de lumière (3') sont réalisées sous la forme de diodes électroluminescentes, en particulier de diodes laser.

7. Spectromètre selon l'une des revendications précédentes,
**caractérisé en ce**
**qu'**un dispositif de commande (27') est prévu, qui, dans une première étape, commande la ou les sources de lumière (3'), ainsi que le photocapteur (5'), pour déterminer une caractéristique de l'échantillon de fluide (2'), dans une seconde étape, sélectionne un mode d'évaluation parmi plusieurs modes d'évaluation enregistrés dans une mémoire (34') du spectromètre (1') en fonction de la caractéristique et, dans une troisième étape, commande la ou les sources de lumière (3'), ainsi que le photocapteur (5), en fonction du mode d'évaluation sélectionné.

8. Spectromètre selon l'une des revendications précédentes,
**caractérisé en ce**
**que** le spectromètre est réalisé portatif et/ou indépendant du secteur.

Fig. 1

EP 2 443 436 B1

Fig.2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2838498 C2
- DE 102006004916 B3
- DE 9319749 U1
- JP 2006153543 A
- JP 2006284398 A
- JP S61111443 A